# EUROPÄISCHE PATENTSCHRIFT

(11) **EP 1 548 298 B1**
(45) Veröffentlichungstag und Bekanntmachung des Hinweises auf die Patenterteilung: **09.07.2008**
(21) Anmeldenummer: 04024722.3
(22) Anmeldetag: 16.10.2004
(51) Int. Cl.: F16B 35/06, F16B 37/14, F16B 41/00

(54) **Befestigungselement**
Fastening element
Elément de fixation

(30) Priorität: 23.12.2003 DE 10361586
(43) Veröffentlichungstag der Anmeldung: 29.06.2005
(73) Patentinhaber: MAGE AG, CH-1791 Courtaman (CH)
(72) Erfinder: Sponer, Wolfgang, 1230 Wien (AT)
(74) Vertreter: Kohler Schmid Möbus

(56) Entgegenhaltungen:
- EP-A- 0 176 968
- EP-A- 0 373 049
- DE-A1- 10 249 993
- US-B1- 6 394 724

## Beschreibung

### Stand der Technik

Die Erfindung betrifft ein Befestigungselement zum Befestigen einer Außenschale oder dgl. an einem Unterbau, mit einem Schaftelement aus einem ersten Material und einer das Schaftelement zumindest teilweise ummantelnden Ummantelung aus einem wärmeisolierenden Material und mit einem Betätigungsabschnitt, an dem ein Anschlag für die Außenschale ausgebildet ist, wobei an der Ummantelung eine Rückhaltevorrichtung vorgesehen ist, die die Außenschale bei montiertem Befestigungselement hintergreift.

Bei einem derartigen aus der US 6,394,724 B1 bekannten Befestigungselement ist die Ummantelung muffenartig ausgebildet. Die Ummantelung wird von dem Schaftelement durchtreten und ist über einen inneren Befestigungsring an diesem gehalten, so dass das Schaftelement in axialer Richtung, d.h., parallel zur Längenerstreckung des Schaftelements in der Ummantelung verschiebbar ist. Beim Einführen des Befestigungselements in eine an der Außenschale vorgesehenen Befestigungsöffnung wird das Schaftelement weitestmöglich durch die Ummantelung hindurchgeführt, bis der Betätigungsabschnitt an der Oberseite der Ummantelung anliegt. An der Unterseite der Ummantelung ist die materialschlüssig mit der Ummantelung verbundene Rückhalteeinrichtung in Form elastischer Finger ausgebildet, welche beim vollständigen Einführen bzw. Eindrücken des Befestigungselements am Rand der Befestigungsöffnung einrasten.

Ein weiteres Befestigungselement ist aus DE 102 49 993 A1 bekannt. Bei dem dort beschriebenen Befestigungselement ist ein Antriebsabschnitt als Schraubenkopf mit einer Scheibe ausgebildet, der materialschlüssig in einen ersten Schaftabschnitt aus Kunststoff übergeht. In dem ersten Schaftabschnitt ist ein zweiter Schaftabschnitt drehfest gehalten angeordnet, der ein Gewinde und eine Bohrspitze aufweist. Wird ein solches Befestigungselement durch eine Platte oder eine Außenschale gesteckt, ist die axiale Lage der Platte bzw. Außenschale bezüglich des Befestigungselements nicht definiert.

Bei derartigen bekannten Befestigungselementen handelt es sich vielfach um Schrauben, die in verschiedenartigste Materialien eingeschraubt werden. Platten oder Außenschalen sollen beispielsweise an einem festen Unterbau befestigt werden. Zwischen den Platten und dem Unterbau können noch Dämmstoffe angeordnet sein und vielfach wird noch gefordert, dass der Krafteintrag über den Schraubenkopf auf die angrenzende Platte breitflächig und gleichmäßig übergeleitet wird. In diesem Fall können noch Haltescheiben bzw. Unterlegscheiben notwendig sein, die zwischen den Schraubenkopf und eine zu befestigenden Platte eingelegt werden.

### Aufgabe der Erfindung

Aufgabe der vorliegenden Erfindung ist es deshalb, ein Befestigungselement zu schaffen, mit dem eine Platte bzw. eine Außenschale in einer definierten Lage angeordnet werden kann, wobei ein einfacher Aufbau und eine uneingeschränkte Funktionalität des Befestigungselements sichergestellt werden sollen.

### Gegenstand der Erfindung

Erfindungsgemäß wird diese Aufgabe dadurch gelöst, dass sich die Ummantelung materialschlüssig an den Betätigungsabschnitt anschließt, und dass die Rückhalteeinrichtung im oberen, dem Betätigungsabschnitt zugeordneten Randbereich der Ummantelung ausgebildet ist.

Durch diese Maßnahme wird die Außenschale in unmittelbarer Nähe zu dem Anschlag gehalten. Durch die Rückhalteeinrichtung wird sichergestellt, dass sich das Befestigungselement nicht von der Außenschale löst. Dadurch, dass die Ummantelung aus einem wärmeisolierenden Material ausgebildet ist, werden Kältebrücken vermieden. Als wärmeisolierendes Material kann beispielsweise Kunststoff, der faserverstärkt sein kann, oder Keramik vorgesehen sein.

In einer bevorzugten Ausführungsform des erfindungsgemäßen Befestigungselements ist der Anschlag vom oberen Ende der Rückhalteeinrichtung beabstandet.

Besonders bevorzugt ist es, wenn die Rückhalteeinrichtung materialschlüssig mit der Ummantelung ausgeführt ist. Dies bedeutet, dass die Rückhalteeinrichtung gleichzeitig mit der Ummantelung hergestellt werden kann und die Ummantelung beispielsweise zusammen mit der Rückhalteeinrichtung an das Schaftelement angespritzt werden kann.

Bei einer besonders bevorzugten Ausführungsform kann an der Ummantelung eine an die Rückhalteeinrichtung angepasste Aussparung vorgesehen sein. In diese Aussparung hinein kann die Rückhalteeinrichtung, also insbesondere die Finger oder der federnde Kegelstumpf, verdrängt werden. Die Finger oder der Kegelstumpf können sich dadurch besonders gut und nahe an den Schaft des Befestigungselements anlegen. Durch diese Maßnahme ist es möglich, das Befestigungselement mit seiner Rückhalteeinrichtung auch durch enge Durchgangsöffnungen der Außenschale hindurchzuführen.

Bei einer bevorzugten Ausführungsform ist die Rückhalteeinrichtung reversibel verformbar ausgebildet. Durch diese Maßnahme ist es möglich, das Befestigungselement in eine Außenschale einzustecken und zumindest teilweise durch eine Öffnung der Außenschale hindurchzuführen, wobei sich die Rückhalteeinrichtung beim Durchführen durch die Außenschale an den Schaft des Befestigungselements anlegen kann. Auf Grund ihrer reversiblen Verformbarkeit kann die Rückhalteeinrichtung ihre ursprüngliche Gestalt annehmen, sobald sie vollständig durch die Öffnung geschoben ist, wobei die unverformte Gestalt größer ist als die Öffnung in der Außenschale. Durch diese Maßnahme hintergreift die Rückhalteeinrichtung die Außenschale und hält diese sicher zwischen der Rückhalteeinrichtung und dem Anschlag.

Eine besonders einfache Ausgestaltung der Rückhalteeinrichtung ergibt sich, wenn die Rückhalteeinrichtung als mindestens ein elastischer Finger ausgebildet ist. Ein elastischer Finger bietet zum einen einen geringen Widerstand, wenn das Befestigungselement durch eine Durchgangsöffnung einer Außenschale durchgeführt wird und bildet zum anderen bei einer von dem Schaft abgespreizten Stellung eine wirksame Rückhalteeinrichtung.

Eine besonders gute Abstützung der Außenschale durch die Rückhalteeinrichtung ergibt sich, wenn die Rückhalteinrichtung als über den Umfang der Ummantelung verteilte Finger ausgebildet ist. Dabei können die Finger materialschlüssig mit der Ummantelung verbunden sein oder an einem Ring, auch aus einem anderen Material als die Ummantelung, angebracht sein. Der Ring kann in einer Ringnut der Ummantelung gegen axiales Verschieben gesichert sein.

Die Rückhalteeinrichtung kann besonders stabil ausgebildet werden, wenn die Finger Verstärkungselemente aufweisen. Beispielsweise können die Finger durch Metalleinlagen verstärkt sein.

Eine Beschädigung der Rückhalteeinrichtung kann vermieden werden, wenn die Rückhalteeinrichtung eine Armierung aufweist. Insbesondere, wenn die Außenschale als Blech ausgebildet ist und die Finger aus Kunststoff ausgebildet sind, kann es beim Einführen des Befestigungselements zum Abscheren der Finger kommen. Sind die Finger in Einführrichtung jedoch mit einer sie schützenden Armierung versehen, kann ein Abscheren bzw. eine Beschädigung der Rückhalteeinrichtung wirksam vermieden werden. Die Armierung kann etwa deckungsgleich mit den Fingern sein oder eine Trichterform aufweisen und den Schaft des Befestigungselements vollständig oder nahezu vollständig umgeben.

Bei einer besonders bevorzugten Ausführungsform umfasst die Rückhalteeinrichtung einen hohlen Kegelstumpf mit einem Längsschlitz. Der hohle Kegelstumpf kann zum einen die Funktion einer Armierung übernehmen und damit beispielsweise an der Ummantelung vorgesehene Finger schützen. Es kann jedoch auch vorgesehen sein, dass als Rückhalteeinrichtung ausschließlich der hohle Kegelstumpf mit Längsschlitz vorgesehen ist. Der Längsschlitz verleiht dem hohlen Kegelstumpf eine elastische Eigenschaft, so dass dessen Querschnitt beim Durchführen der Rückhalteeinrichtung durch eine Außenschale verringert werden kann und der Kegelstumpf seine ursprüngliche Gestalt annehmen kann, nachdem er vollständig durch eine Öffnung in der Außenschale hindurchgeführt wurde. Beispielsweise kann der hohle Kegelstumpf aus federndem Stahl hergestellt sein.

Bei einer besonders bevorzugten Weiterbildung kann vorgesehen sein, dass der Kegelstumpf an seinem verjüngten Ende mindestens einen radial nach innen vorstehenden Vorsprung, insbesondere einen Rand aufweist, der mit einer entsprechenden an der Ummantelung ausgebildeten Ausnehmung, insbesondere einer Ringnut, zusammenwirkt. Durch diese Maßnahme kann sich der Kegelstumpf an der Ausnehmung abstützen und wird ein axiales Verschieben des Kegelstumpfes entlang des Befestigungselements vermieden.

Bei einer alternativen Ausführungsform kann vorgesehen sein, dass die Ummantelung ein Gewinde aufweist. Mit Hilfe des Gewindes kann das Befestigungselement in eine Durchgangsöffnung der Außenschale eingeschraubt werden. Es kann vorgesehen sein, dass die Außenschale auf dem Gewinde gehalten wird. Andererseits kann vorgesehen sein, dass zwischen dem Gewinde und dem Anschlag ein zylindrischer Schaftabschnitt vorgesehen ist, auf dem die Außenschale zu liegen kommt. Bei dieser Ausführungsform wird die Außenschale zwischen dem Gewinde und dem Anschlag gehalten. Das Gewinde in der Ummantelung, die aus Kunststoff bestehen kann, kann direkt zusammen mit der Ummantelung gespritzt werden oder nachträglich geschnitten werden.

Alternativ kann jedoch vorgesehen sein, dass das Gewinde an einer auf die Ummantelung aufsteckbaren Gewindehülse ausgebildet ist. Die Gewindehülse kann aus dem gleichen oder einem anderen Material als die Ummantelung hergestellt sein. Die Gewindehülse kann nachträglich auf die Ummantelung aufgesetzt werden. Durch diese Maßnahme können insbesondere Befestigungselemente des Standes der Technik derart nachgerüstet werden, dass sie eine Rückhalteeinrichtung aufweisen.

Eine besonders gute Kraftübertragung auf das Schaftelement ergibt sich, wenn sich das Schaftelement bis in den Betätigungsabschnitt erstreckt. Durch diese Maßnahme können Verwindungen des Befestigungselements, insbesondere wenn der Betätigungsabschnitt als Schraubenkopf ausgebildet ist, wirksam vermieden werden.

Die mechanische Stabilität des Befestigungselements kann erhöht und Kältebrücken können wirksam vermieden werden, wenn das Schaftelement unterbrochen ist, wobei über die Ummantelung ein Kraftschluss zwischen den Schaftelementteilen hergestellt ist. Dabei können die Enden der Schaftelementteile die unterschiedlichsten Gestalten annehmen. Insbesondere können die Enden der Schaftelemente aufgespreizt sein oder eine Rändelung aufweisen, um eine möglichst gute Verdrehsicherung darzustellen.

Die mechanische Stabilität des Befestigungselements kann weiter verbessert werden, wenn die Ummantelung im Bereich der Unterbrechung des Schaftelements eine Verstärkungshülse aufweist. Insbesondere kann die Scher- und Biegefestigkeit des Befestigungselements durch diese Maßnahme verbessert werden.

Bei einer besonders bevorzugten Ausführungsform kann vorgesehen sein, dass das Schaftelement in einem Schaftelementbereich mindesten einen Vorsprung aufweist, der sich in Richtung des freien Endes des Befestigungselements verjüngt. Durch diese Maßnahme wird das Einbringen des Befestigungselements in eine Außenschale, aber auch in darunter liegende Dämmstoffe, erleichtert. Dabei kann das Schaftelement einen oder mehrere Flügel aufweisen oder als (hohl-)kegelförmiger Ring ausgebildet sein.

Besonders vorteilhaft ist es, wenn sich die Ummantelung an den mindestens einen Vorsprung aufweisenden Schaftelementbereich anschließt. Durch diese Maßnahme wird die Ummantelung durch den oder die Vorsprünge beim Einbringen des Befestigungselements geschützt. Insbesondere wird das Material, in das das Befestigungselement eingebracht wird, durch den oder die Vorsprünge auf den Außendurchmesser der Ummantelung aufgeweitet oder aufgeschnitten, wenn die Vorsprünge mit Schneidkanten versehen sind.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Zeichnung

Ein Ausführungsbeispiel ist in der schematischen Zeichnung dargestellt und wird in der nachfolgenden Beschreibung erläutert. Es zeigt:
- **Fig. 1**: Ein Befestigungselement im Längsschnitt, das Finger als Rückhalteeinrichtung aufweist;
- **Fig. 2**: das Befestigungselement der Fig. 1, wobei die Finger mit einer Armierung versehen sind;
- **Fig. 3**: eine Schnittdarstellung eines Befestigungselements mit einem hohlen Kegelstumpf als Rückhalteeinrichtung;
- **Fig. 4a**: eine Seitenansicht eines hohlen Kegelstumpfs;
- **Fig. 4b**: eine Draufsicht auf den Kegelstumpf der Fig. 4a;
- **Fig. 4c**: eine Schnittdarstellung gemäß der Linie IVc-IVc des Kegelstumpfs der Fig. 4a;
- **Fig. 5**: ein Befestigungselement, bei dem sich das Schaftelement nicht bis in den Betätigungsabschnitt erstreckt;
- **Fig. 6**: ein Befestigungselement mit einem sich verjüngenden Schaftabschnitt und mit einer Aussparung in der Ummantelung des Schaftelements;
- **Fig. 7**: eine erste Darstellung eines Befestigungselements mit Gewinde auf der Ummantelung;
- **Fig. 8**: eine Schnittdarstellung des Befestigungselements der Fig. 7;
- **Fig. 9**: ein Befestigungselement mit unterbrochenem Schaftelement;
- **Fig. 10**: ein Befestigungselement gemäß der Fig. 9 mit Verstärkungshülse.

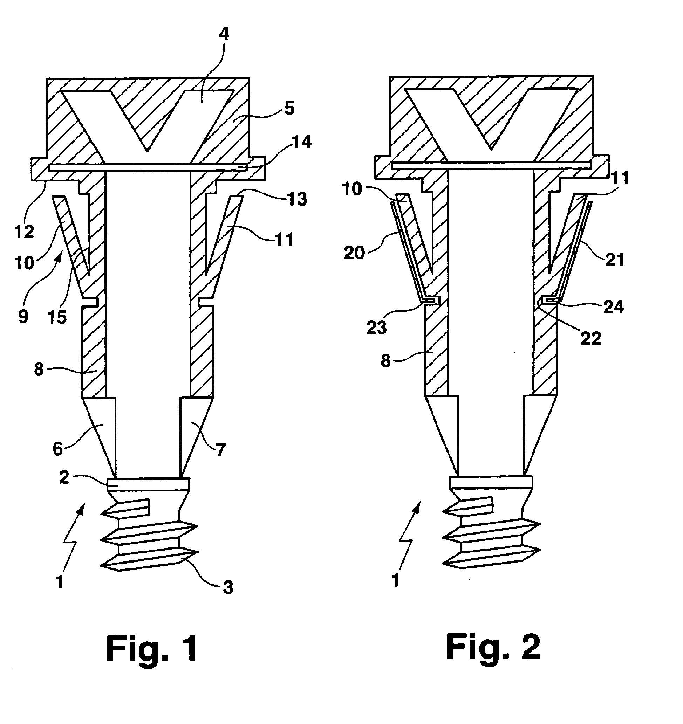

In der **Fig. 1** ist ein Befestigungselement 1 in einer Schnittdarstellung dargestellt. Das Befestigungselement 1 weist ein Schaftelement 2 auf, das an seinem freien Ende 3 ein Gewinde aufweist und am gegenüberliegenden Ende 4 aufgespreizt ist. Das Schaftelement 2 erstreckt sich mit seinem aufgespreizten Ende 4 bis in einen Betätigungsabschnitt 5 hinein. An dem Schaftelement 2 sind zwei als Flügel ausgebildete Vorsprünge 6, 7 vorgesehen, die sich zum freien Ende 3 hin verjüngen. Ausgehend von den Vorsprüngen 6, 7 ist das Schaftelement von einer Ummantelung 8 umgeben, die aus einem wärmeisolierenden Material besteht. An der Ummantelung 8 ist eine Rückhalteeinrichtung 9 vorgesehen, die zwei Finger 10, 11 umfasst. An den Betätigungsabschnitt 5 schließt sich ein Anschlag 12 an, der vom oberen Ende 13 der Rückhalteeinrichtung 9 beabstandet ist. Durch die Rückhalteeinrichtung 9 kann eine Außenschale zwischen dem Rückhalteelement 9 und dem Anschlag 12 gehalten werden. Der Abstand zwischen dem Anschlag 12 und dem Ende 13 der Rückhalteeinrichtung 9 ist so gewählt, dass beispielsweise eine als Blech ausgebildetes Außenschale, gegebenenfalls mit einer zusätzlichen Unterlegscheibe, in dem Raum zwischen dem Anschlag 12 und der Rückhalteeinrichtung 9 aufgenommen werden kann. Eine Platte **14**, die ebenfalls vollständig von dem wärmeisolierenden Material ummantelt ist, trägt zur weiteren Stabilität des Befestigungselements 1 bei. Im Ausführungsbeispiel der Fig. 1 ist das Befestigungselement 1 als Schraube und der Betätigungsabschnitt 5 daher als Schraubenkopf ausgebildet. Beim Durchführen des Befestigungselements 2 durch eine Außenschale legen sich die Finger 10, 11 an den Schaft 15 an und weiten sich wieder auf, sobald die Außenschale zwischen dem Anschlag 12 und dem Ende 13 zu liegen kommt.

In der **Fig. 2** ist das Befestigungselement 1 der Fig. 1 dargestellt, wobei die Finger 10, 11 durch eine Armierung **20**, **21** geschützt sind. Die Armierung 20, 21 kann beispielsweise aus Metall bestehen. In der Ummantelung 8 ist eine Ringnut **22** vorgesehen, in die die Armierung 20, 21 mit einem Vorsprung **23**, **24** eingreifen kann und somit gegen ein axiales Verschieben gesichert ist. Die Armierung 20, 21 kann einstückig als geschlitzter, hohler Kegelstumpf ausgebildet sein oder in etwa deckungsgleich mit den Fingern 10, 11 sein.

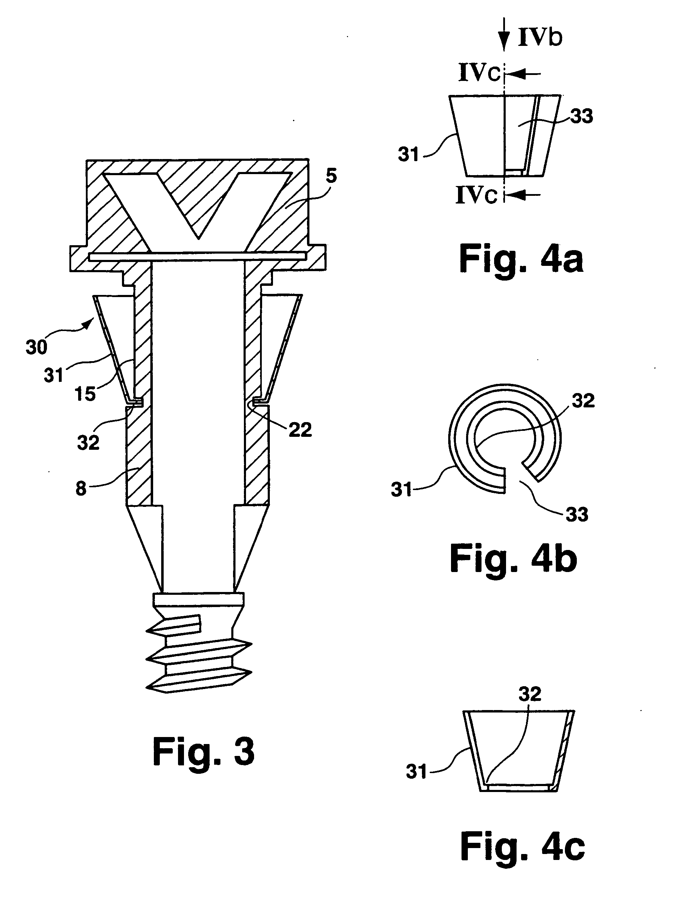

Bei der Ausführungsform der **Fig. 3** ist als Rückhalteeinrichtung **30** ein hohler Kegelstumpf **31** vorgesehen, der sich im Querschnitt in Richtung auf den Betätigungsabschnitt 5 aufweitet. Der Kegelstumpf 31 weist an seinem unteren Ende einen radial nach innen vorstehenden Rand **32** auf, der in die umlaufende Ringnut 22 eingreift. Dadurch ist der Kegelstumpf 31 gegen ein axiales Verschieben gesichert. Es ist auch denkbar, dass anstatt des Randes 32 einer oder mehrere radial nach innen vorstehende diskrete Vorsprünge vorgesehen sind, die in entsprechende diskrete Ausnehmungen im Schaft 15 bzw. in der Ummantelung 8 oder in die Ringnut 22 eingreifen.

In der **Fig. 4a** ist eine Seitenansicht des Kegelstumpfs 31 dargestellt. Der Kegelstumpf 31 weist einen Längsschlitz **33** in seiner Wandung auf. Dadurch kann der Querschnitt des Kegelstumpfes 31 verringert werden, wenn das Befestigungselement zusammen mit dem Kegelstumpf 31 durch eine Durchbruchsöffnung in der Außenschale hindurch geschoben wird. Nachdem der Kegelstumpf 31 durch eine Öffnung in der Außenschale hindurch geführt ist, weitet er sich wieder auf seine ursprüngliche Größe auf und hintergreift dadurch die Außenschale. Das Abschlusselement ist damit sicher auf dem Befestigungselement gehalten.

In der **Fig. 4b** ist eine Draufsicht auf den Kegelstumpf 31 gezeigt. Gut zu sehen sind der Schlitz 33 und der Rand 32. Der Schlitz 33 ermöglicht weiterhin das Aufsetzen des Kegelstumpfes 31 auf den Schaft des Befestigungselements. Dazu wird der Schlitz 33 aufgeweitet und der Kegelstumpf 31 axial auf das Befestigungselement aufgeschoben bis der Rand 32 in die Ringnut einrastet.

In der **Fig. 4c** ist eine Schnittdarstellung gemäß der Linie IVc-IVc der Fig. 4a dargestellt. Der Rand 32 steht radial nach innen vor.

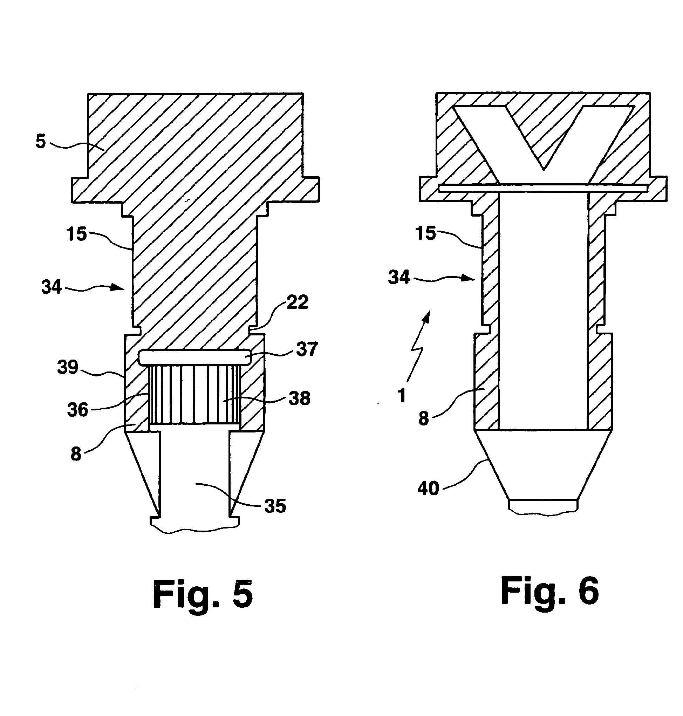

Bei der Ausführungsform der **Fig. 5** erstreckt sich das Schaftelement **35** nicht bis in das Betätigungselement 5. Das Ende **36** des Schaftelements 35 weist eine Haltescheibe **37** auf, die die Verbindung aus unterschiedlichen Werkstoffen, wie einer Ummantelung 8 aus Kunststoff und einem Schaftelement 35 aus Metall stabilisiert. Das Ende 36 weist eine achsparallele Rändelung oder Verzahnung **38** auf, die der besseren Übertragung des Drehmoments von dem Betätigungsabschnitt 5 auf das Schaftelement 35 dient. Grundsätzlich sind jedoch beliebig viele andere Ausgestaltungen des Endes 36 denkbar, die eine gute Verankerung des Schaftelements 35 in der Ummantelung 8 bewirken und zum Übertragen eines Drehmoments geeignet sind. Der Schaft 15 weist oberhalb der umlaufenden Ringnut 22 eine Aussparung **34** und damit einen gegenüber dem Schaftabschnitt **39** verringerten Durchmesser auf. Dadurch kann sich eine Rückhalteeinrichtung an den Schaft 15 anlegen, ohne den Außendurchmesser des Befestigungselements 1 an dieser Stelle zu vergrößern, während das Befestigungselement 1 durch eine Öffnung in einer Außenschale hindurchgeführt wird.

Bei der in der **Fig**. **6** dargestellten Ausführungsform ist ebenfalls die Aussparung 34 des Schafts 15 zu sehen, die ein Anschmiegen der Rückhalteeinrichtung an den Schaft 15 erlaubt. Weiterhin ist zu beachten, dass ein Schaftelementabschnitt einen Vorsprung **40** aufweist, der sich zum freien Ende des Befestigungselements 1 hin verjüngt und als kegelförmiger Ring ausgebildet ist. Der Vorsprung 40 dient dazu, Material, beispielsweise Dämmmaterial, das unter der Außenschale angeordnet ist, auf den Schaftdurchmesser im Bereich der Ummantelung 8 aufzuweiten.

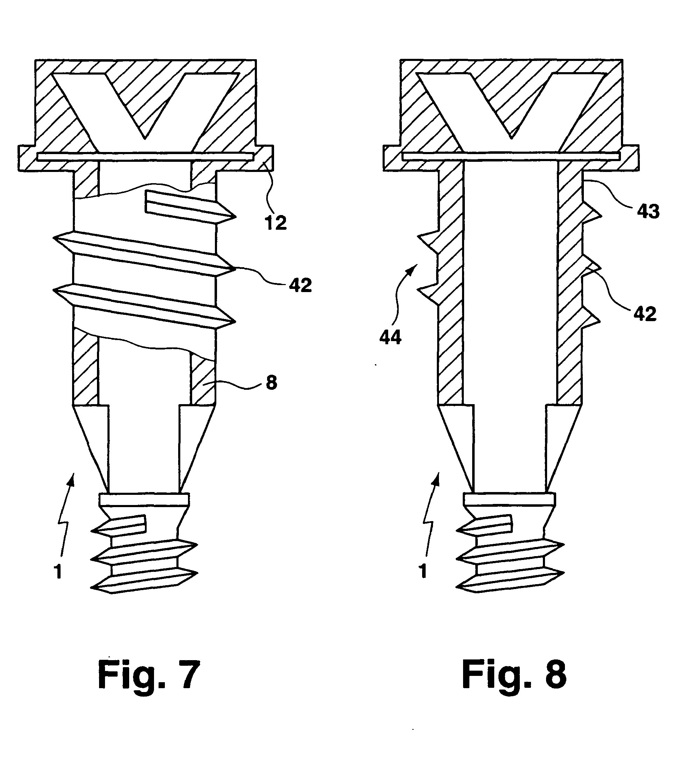

Bei der Ausführungsform des Befestigungselements 1 gemäß der **Fig. 7** ist auf der Ummantelung 8 im oberen Abschnitt ein Gewinde **42** vorgesehen. Im dargestellten Beispiel erstreckt sich das Gewinde 42 bis an den Anschlag 12. Ein Abschlusselement wird daher auf dem Gewinde 42 in unmittelbarer Nähe zum Anschlag 12 gehalten. Das Gewinde 42 ist aus demselben Material wie die Ummantelung 8 hergestellt und kann entweder während des Spritzgießens der Ummantelung 8 angeformt werden oder nachträglich geschnitten werden.

Bei der Ausführungsform der **Fig. 8** erstreckt sich das Gewinde 42 nicht ganz bis zum Anschlag 12, sondern lässt einen Bereich **43** frei. In diesem Bereich kommt das Abschlusselement zu liegen. Durch das Gewinde 42 wird verhindert, dass sich das Befestigungselement 1 von der Außenschale löst. Das Gewinde 42 stellt daher eine Rückhalteeinrichtung **44** dar.

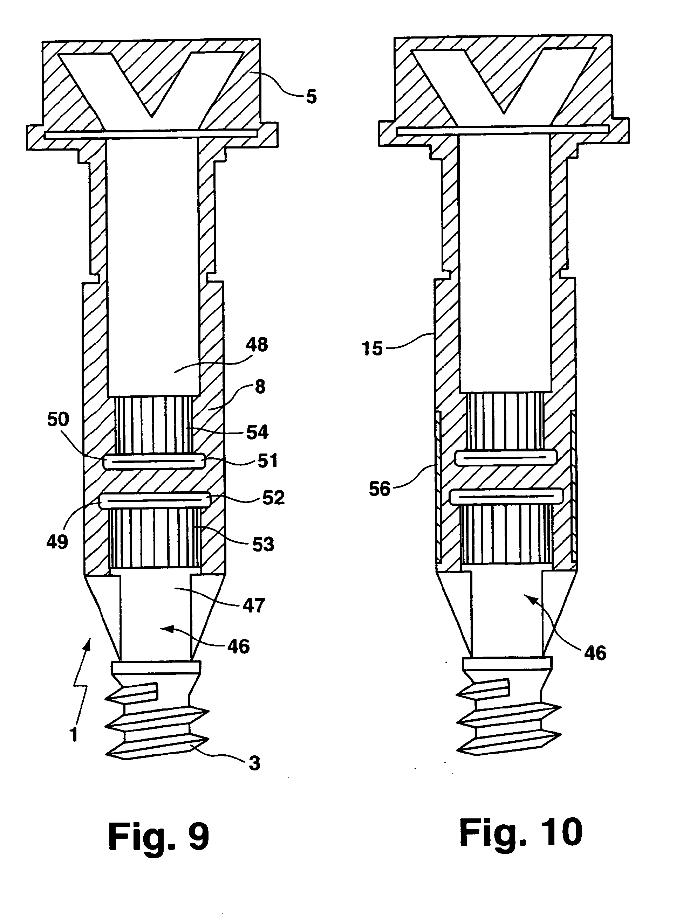

Das Befestigungselement 1 gemäß der **Fig. 9** weist ein Schaftelement **46** auf, das unterbrochen ist. Das Schaftelement 46 umfasst daher die Schaftelementteile **47**, **48**. An den Schaftelementteilen 47, 48 sind Enden **49, 50** vorgesehen, die eine Halteplatte **51, 52** und eine daran anschließende Rändelung bzw. Verzahnung **53, 54** aufweisen. Durch diese Maßnahme wird sichergestellt, dass das an dem Betätigungsabschnitt 5 eingebrachte Drehmoment bis an das freie Ende 3 übertragen wird. Die Enden 49, 50 stellen daher eine Verankerung in der Ummantelung 8 her.

In der **Fig. 10** ist gezeigt, wie der Bereich, in dem das Schaftelement 46 unterbrochen ist, durch eine Hülse **56** verstärkt ist. Die Hülse 56 ist in einer Ausnehmung angeordnet, so dass der Außendurchmesser des Schafts 15 durch die Hülse 56 nicht vergrößert wird.

Ein Befestigungselement (1) umfasst einen metallisches Schaftelement (2), das von einer Ummantelung (8) aus einem wärmeisolierenden Material ummantelt ist, und ein Betätigungselement (5) mit einem Anschlag (12), wobei in einem Abstand von dem Anschlag (12) an der Ummantelung (8) eine Rückhalteeinrichtung (9) vorgesehen ist. Die Rückhalteeinrichtung (9) hält eine Außenschale in unmittelbarer Nähe des Anschlags (12) auf dem Schaft (15) des Befestigungselements (1).

## Patentansprüche

1. Befestigungselement (1) zum Befestigen einer Außenschale an einem Unterbau, mit einem Schaftelement (2, 35, 46) aus einem ersten Material und einer das Schaftelement (2, 35, 46) zumindest teilweise ummantelnden Ummantelung (8) aus einem wärmeisolierenden Material und mit einem Betätigungsabschnitt (5), an dem ein Anschlag (12) für die Außenschale ausgebildet ist, wobei an der Ummantelung (8) eine Rückhalteeinrichtung (9, 30, 44) vorgesehen ist, die die Außenschale bei montiertem Befestigungselement (1) hintergreift,
**dadurch gekennzeichnet, dass**
sich die Ummantelung (8) materialschlüssig an den Betätigungsabschnitt (5) anschließt, und dass die Rückhalteeinrichtung (9, 30, 44) im oberen, dem Betätigungsabschnitt (5) zugeordneten Randbereich der Ummantelung (8) ausgebildet ist.

2. Befestigungselement nach Anspruch 1, **dadurch gekennzeichnet, dass** der Anschlag (12) vom oberen Ende (13) der Rückhalteeinrichtung (9, 30, 44) beabstandet ist.

3. Befestigungselement nach einem der vorhergehenden Ansprüche, **dadurch gekennzeichnet, dass** an der Ummantelung (8) eine an die Rückhalteeinrichtung (9, 30, 44) angepasste Aussparung (34) vorgesehen ist.

4. Befestigungselement nach einem der vorhergehenden Ansprüche, **dadurch gekennzeichnet, dass** die Rückhalteeinrichtung (9, 30, 44) reversibel verformbar ist.

5. Befestigungselement nach einem der vorhergehenden Ansprüche, **dadurch gekennzeichnet, dass** die Rückhalteeinrichtung (9, 44) materialschlüssig mit der Ummantelung (8) ausgeführt ist.

6. Befestigungselement nach einem der vorhergehenden Ansprüche, **dadurch gekennzeichnet, dass** die Rückhalteeinrichtung (9) als mindestens ein elastischer Finger (10, 11) ausgebildet ist.

7. Befestigungselement nach Anspruch 6, **dadurch gekennzeichnet, dass** die Rückhalteeinrichtung (9) als über den Umfang der Ummantelung (8) verteilte Finger (10, 11) ausgebildet ist.

8. Befestigungselement nach Anspruch 6 oder 7, **dadurch gekennzeichnet, dass** die Finger (10, 11) Verstärkungselemente aufweisen.

9. Befestigungselement nach einem der vorhergehenden Ansprüche, **dadurch gekennzeichnet, dass** die Rückhalteeinrichtung (9) eine Armierung (20, 21) aufweist.

10. Befestigungselement nach einem der vorhergehenden Ansprüche, **dadurch gekennzeichnet, dass** die Rückhalteeinrichtung (30) einen hohlen Kegelstumpf (31) mit einem Längsschlitz (33) umfasst.

11. Befestigungselement nach Anspruch 10, **dadurch gekennzeichnet, dass** der Kegelstumpf (31) an seinem verjüngten Ende mindestens einen radial nach innen vorstehenden Vorsprung, insbesondere einen Rand (32) aufweist, der mit einer entsprechenden an der Ummantelung (8)ausgebildeten Ausnehmung, insbesondere einer Ringnut (22), zusammenwirkt.

12. Befestigungselement nach Anspruch 1, **dadurch gekennzeichnet, dass** die Ummantelung (8) ein Gewinde (42) aufweist.

13. Befestigungselement nach Anspruch 12, **dadurch gekennzeichnet, dass** das Gewinde (42) an einer auf die Ummantelung (8) aufsteckbaren Gewindehülse ausgebildet ist.

14. Befestigungselement nach einem der vorhergehenden Ansprüche, **dadurch gekennzeichnet, dass** sich das Schaftelement (2, 46) bis in den Betätigungsabschnitt (5) erstreckt.

15. Befestigungselement nach einem der vorhergehenden Ansprüche, **dadurch gekennzeichnet, dass** das Schaftelement (46) unterbrochen ist, wobei über die Ummantelung (8) ein Kraftschluss zwischen den Schaftelementteilen (47, 48) hergestellt ist.

16. Befestigungselement nach Anspruch 15, **dadurch gekennzeichnet, dass** die Ummantelung (8) im Bereich der Unterbrechung des Schaftelements (46) eine Verstärkungshülse (56) aufweist.

17. Befestigungselement nach einem der vorhergehenden Ansprüche, **dadurch gekennzeichnet, dass** das Schaftelement (2, 35, 46) in einem Schaftelementbereich mindestens einen Vorsprung (6, 7, 40) aufweist, der sich in Richtung des freien Endes (3) des Befestigungselements (1) verjüngt.

18. Befestigungselement nach Anspruch 17, **dadurch gekennzeichnet, dass** sich die Ummantelung (8) an den Schaftelementbereich anschließt.

## Claims

1. Fastening element (1) for fastening an outer shell to a substructure, having a shank element (2, 35, 46) made of a first material and a covering (8) made of a thermally insulating material at least partly encompassing the shank element (2, 35, 46), and having an actuating section (5), on which a stop (12) for the outer shell is formed, a retaining device (9, 30, 44) being provided on the covering (8) and engaging behind the outer shell when the fastening element (1) is mounted,
**characterized in that**
the covering (8) adjoins the actuating section (5) cohesively, and **in that** the retaining device (9, 30, 44) is formed in the upper edge region of the covering (8), assigned to the actuating section (5).

2. Fastening element according to Claim 1, **characterized in that** the stop (12) is spaced apart from the upper end (13) of the retaining device (9, 30, 44).

3. Fastening element according to one of the preceding claims, **characterized in that** a cut-out (34) matched to the retaining device (9, 30, 44) is provided on the covering (8).

4. Fastening element according to one of the preceding claims, **characterized in that** the retaining device (9, 30, 44) can be deformed reversibly.

5. Fastening element according to one of the preceding claims, **characterized in that** the retaining device (9, 44) is implemented cohesively with the covering (8).

6. Fastening element according to one of the preceding claims, **characterized in that** the retaining device (9) is formed as at least one elastic finger (10, 11).

7. Fastening element according to Claim 6, **characterized in that** the retaining device (9) is formed as fingers (10, 11) distributed over the circumference of the covering (8).

8. Fastening element according to Claim 6 or 7, **characterized in that** the fingers (10, 11) have reinforcing elements.

9. Fastening element according to one of the preceding claims, **characterized in that** the retaining device (9) has a reinforcement (20, 21).

10. Fastening element according to one of the preceding claims, **characterized in that** the retaining device (30) comprises a hollow truncated cone (31) having a longitudinal slot (33).

11. Fastening element according to Claim 10, **characterized in that** the truncated cone (31) has on its tapered end at least one projection projecting radially inwards, in particular an edge (32), which interacts with a corresponding cut-out formed on the covering (8), in particular an annular groove (22).

12. Fastening element according to Claim 1, **characterized in that** the covering (8) has a thread (42).

13. Fastening element according to Claim 12, **characterized in that** the thread (42) is formed on a threaded sleeve that can be pushed onto the covering (8).

14. Fastening element according to one of the preceding claims, **characterized in that** the shank element (2, 46) extends as far as into the actuating section (5).

15. Fastening element according to one of the preceding claims, **characterized in that** the shank element (46) is interrupted, a force fit between the parts (47, 48) of the shank element being produced via the covering (8).

16. Fastening element according to Claim 15, **characterized in that**, in the region of the interruption of the shank element (46), the covering (8) has a reinforcing sleeve (56).

17. Fastening element according to one of the preceding claims, **characterized in that**, in one shank element region, the shank element (2, 35, 46) has at least one projection (6, 7, 40) which tapers in the direction of the free end (3) of the fastening element (1).

18. Fastening element according to Claim 17, **characterized in that** the covering (8) adjoins the shank element region.

## Revendications

1. Elément de fixation (1) pour la fixation d'une coque extérieure sur un substrat, avec un élément en tige (2, 35, 46) réalisé dans un premier matériau et une enveloppe (8) enrobant au moins partiellement l'élément en tige (2, 35, 46) réalisée dans un matériau thermo-isolant, et avec une partie d'actionnement (5) sur laquelle est formée une butée (12) pour la coque extérieure, un dispositif de retenue (9, 30, 44) étant prévu sur l'enveloppe (8), lequel s'appuie sur la coque extérieure une fois l'élément de fixation (1) monté,
**caractérisé**
**en ce que** l'enveloppe (8) est matériellement raccordée à la partie d'actionnement (5), et
**en ce que** le dispositif de retenue (9, 30, 44) est formé sur la partie de bordure supérieure de l'enveloppe (8) associée à la partie d'actionnement (5).

2. Elément de fixation selon la revendication 1, **caractérisé en ce que** la butée (12) est espacée de l'extrémité supérieure (13) du dispositif de retenue (9, 30, 44).

3. Elément de fixation selon l'une des revendications précédentes, **caractérisé en ce qu'**un évidement (34) ajusté au dispositif de retenue (9, 30, 44) est prévu sur l'enveloppe (8).

4. Elément de fixation selon l'une des revendications précédentes, **caractérisé en ce que** le dispositif de retenue (9, 30, 44) est déformable de façon réversible.

5. Elément de fixation selon l'une des revendications précédentes, **caractérisé en ce que** le dispositif de retenue (9, 44) est matériellement raccordé à l'enveloppe (8).

6. Elément de fixation selon l'une des revendications précédentes, **caractérisé en ce que** le dispositif de retenue (9) est réalisé comme une bague élastique (10, 11) au moins.

7. Elément de fixation selon la revendication 6, **caractérisé en ce que** le dispositif de retenue (9) est réalisé comme doigts (10, 11) répartis sur le contour de l'enveloppe (8).

8. Elément de fixation selon la revendication 6 ou 7, **caractérisé en ce que** les doigts (10, 11) comprennent des éléments de renforcement.

9. Elément de fixation selon l'une des revendications précédentes, **caractérisé en ce que** le dispositif de retenue (9) comporte une armature (20, 21).

10. Elément de fixation selon l'une des revendications précédentes, **caractérisé en ce que** le dispositif de retenue (30) comprend un cône tronqué (31) creux avec une fente longitudinale (33).

11. Elément de fixation selon la revendication 10, **caractérisé en ce que** le cône tronqué (31) présente sur son extrémité rétrécie au moins une saillie s'étendant radialement vers l'intérieur, en particulier un bord (32) coopérant avec un évidement correspondant, en particulier une rainure annulaire (22) formée sur l'enveloppe (8).

12. Elément de fixation selon la revendication 1, **caractérisé en ce que** l'enveloppe (8) présente un filet (42).

13. Elément de fixation selon la revendication 12, **caractérisé en ce que** le filet (42) est formé sur un manchon fileté emmanchable sur l'enveloppe (8).

14. Elément de fixation selon l'une des revendications précédentes, **caractérisé en ce que** l'élément en tige (2, 46) s'étend jusque vers la partie d'actionnement (5).

15. Elément de fixation selon l'une des revendications précédentes, **caractérisé en ce que** l'élément en tige (46) est interrompu, une liaison mécanique entre les éléments en tige (47, 48) étant réalisée par l'enveloppe (8).

16. Elément de fixation selon la revendication 15, **caractérisé en ce que** l'enveloppe (8) comporte un manchon de renforcement (56) au niveau de l'interruption de l'élément en tige (46).

17. Elément de fixation selon l'une des revendications précédentes, **caractérisé en ce que** l'élément en tige (2, 35, 46) comporte au moins une saillie (6, 7, 40) dans une zone d'élément en tige, laquelle se rétrécit en direction de l'extrémité libre (3) de l'élément de fixation (1).

18. Elément de fixation selon la revendication 17, **caractérisé en ce que** l'enveloppe (8) est adjacente à la zone d'élément en tige.
